# EUROPEAN PATENT APPLICATION

(11) **EP 2 275 245 A1**
(43) Date of publication of application: **19.01.2011**
(21) Application number: 08874282.0
(22) Date of filing: 05.12.2008
(51) Int. Cl.: B29C 47/40

(54) **MULTISHAFT EXTRUDER**

(30) Priority: 15.05.2008 JP 2008128388
(71) Applicant: Sanwa Kako CO., LTD., 56, Butsugenji-cho Kamitoba Minami-ku Kyoto-shi Kyoto 601-8103 (JP)
(72) Inventor: FUJIMOTO, Michihiro, Asago-City Hyogo 679-3311 (JP); YOSHIMURA, Koji, Kyoto-City Kyoto 601-8103 (JP); SAHARA, Masaaki, Kyoto-City Kyoto 601-8103 (JP)
(74) Representative: TBK-Patent
(86) International application number: PCT/JP2008/072118
(87) International publication number: WO 2009/139091

(57) **Abstract**

There is provided a multi-screw extruder for reclaiming foam made of cross-linked polymer material into reusable material by causing the foam to pass through a kneading zone, wherein the kneading zone is divided into at least preceding and subsequent two kneading zones and a temperature equalizing transfer zone for equalizing temperature of the material passing through the zone is provided between the preceding kneading zone and the subsequent kneading zone.

## Description

### TECHNICAL FIELD

The present invention relates to a multi-screw extruder used for reclaiming cross-linked polymer material.

### BACKGROUND TECHNIQUE

Conventionally, a method of reclaiming cross-linked polyethylene or the like, which was used as wire coating material, by plasticating it with a multi-screw extruder has been developed. As a multi-screw extruder used for such a reclaiming operation, there is a known extruder including a feeding zone for feeding charged material, a kneading zone for applying a mechanical shearing force to the material to facilitate plasticating while controlling temperature and pressure of the material introduced through the feeding zone, and an extruding zone for extruding the material, which has been plasticated as a result of passage through the kneading zone, while suppressing re-cross-linking reaction (e.g., Patent Document 1).
Patent Document 1: Japanese Patent No. 3026270

### DISCLOSURE OF THE INVENTION

### PROBLEM TO BE SOLVED BY THE INVENTION

With this structure, however, foam refuse made of cross-linked polymer material is likely to deteriorate for some reason when it is being reclaimed and it is difficult to efficiently reclaim the refuse.

The present inventors studied hard to find out the reason for such problem and thus found that the low-density foam is extremely susceptible to temperature conditions and that it is difficult to sufficiently suppress the deterioration with a conventional temperature control.

In other words, in the conventional multi-screw extruder, a temperature sensor is attached to a barrel including screws and temperature of the foam is controlled by heating and cooling controls of the barrel based on a detection result from the temperature sensor. However, it was found that this control method only controls temperature in a vicinity of an inner wall of the barrel and that, when a large difference occurs between a foam temperature in the vicinity of the barrel inner wall and a foam temperature in a vicinity of the screws, i.e., when a large temperature difference occurs between the inside and the outside, the foam temperature in the vicinity of the screws may increase over a control target value, which deteriorates the material.

The present invention has been made based on such a result of the study and it is its object to provide a multi-screw extruder with which the material is less likely to deteriorate even if the processing is carried out at relatively high speed.

### APPROACH FOR SOLVING THE PROBLEM

In other words, a multi-screw extruder according to the present invention is a multi-screw extruder for reclaiming foam made of cross-linked polymer material into reusable material by causing the foam to pass through a kneading zone, wherein the kneading zone is divided into at least preceding and subsequent two kneading zones and a temperature equalizing transfer zone for equalizing temperature of the foam sheared in the kneading zone is provided between the preceding kneading zone and the subsequent kneading zone.

With this structure, a temperature difference between the inside and the outside that is being caused during passage through the preceding kneading zone can be reduced by passage through the temperature equalizing transfer zone. Therefore, as compared with a case in which the preceding and subsequent kneading zones are directly connected to each other, it is possible to suppress increase of the temperature of the foam to an unexpected temperature during processing.

As a preferable form of the temperature equalizing transfer zone, a zone in which screw elements having structures not for applying mechanical shearing forces to the foam passing through the temperature equalizing transfer zone are arranged is conceivable.

When such screw elements are used, if two shafts rotating in the same direction are respectively mounted with the screw elements, it is possible to obtain a sufficient effect. In this case, it is especially preferable that the respective screw elements in the same positions of the respective shafts are mounted to the shafts in directions at 90° with respect to each other.

In a space formed by contact of a side peripheral face between a flight of one of the shafts and a flight of the other with each other in the temperature equalizing transfer zone, part of the foam passing by the screw elements of one of the shafts and part of the foam passing by the screw elements of the other come in contact with each other from different directions as a result of rotation of the screws in the same direction. In this space, pieces of sheared foam come in contact with each other and, as a result, the foam moves to the second kneading zone while being stirred. With this structure, as the parts of the foam near the screws move toward the second kneading zone when they pass through the temperature equalizing transfer zone, it is possible to reduce the temperature difference between the inside and the outside.

### EFFECTS OF THE INVENTION

The invention has the structure described above and can reasonably reduce the temperature difference of the foam between the inside and the outside in the barrel in the temperature equalizing transfer zone. As a result, deterioration of the material can be suppressed and the cross-linked polymer material can be efficiently reclaimed without reducing processing speed.

### BRIEF DESCRIPTION OF THE DRAWINGS

[FIG. 1] A front view for explaining a general structure of a twin screw extruder of an embodiment of the present invention.
[FIG. 2] A plan view for illustrating a structure of a screw of the embodiment.

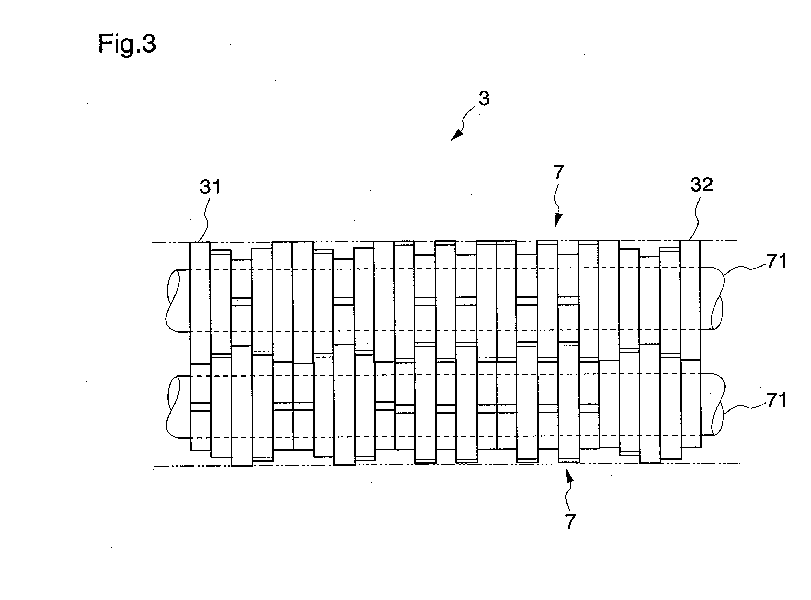

[FIG. 3] A plan view for illustrating arrangements of screw elements in a first kneading zone of the embodiment.
[FIG. 4] A plan view for illustrating arrangements of screw elements in a temperature equalizing transfer zone of the embodiment.
[FIG. 5] A sectional view along a line A-A in FIG. 4.
[FIG. 6] A perspective view illustrating preferable reclaimed foam obtained in the embodiment.
[FIG. 7] A perspective view for illustrating reclaimed foam with burnt resin and obtained in related art.

### EXPLANATION OF REFERENCE NUMERALS

1···multi-screw extruder
2···material feeding zone
3···first kneading zone
4···temperature equalizing transfer zone
5···second kneading zone
6···extruding zone
7···screw

### BEST MODE FOR CARRYING OUT THE INVENTION

An embodiment of the present invention will be described below with reference to the drawings.

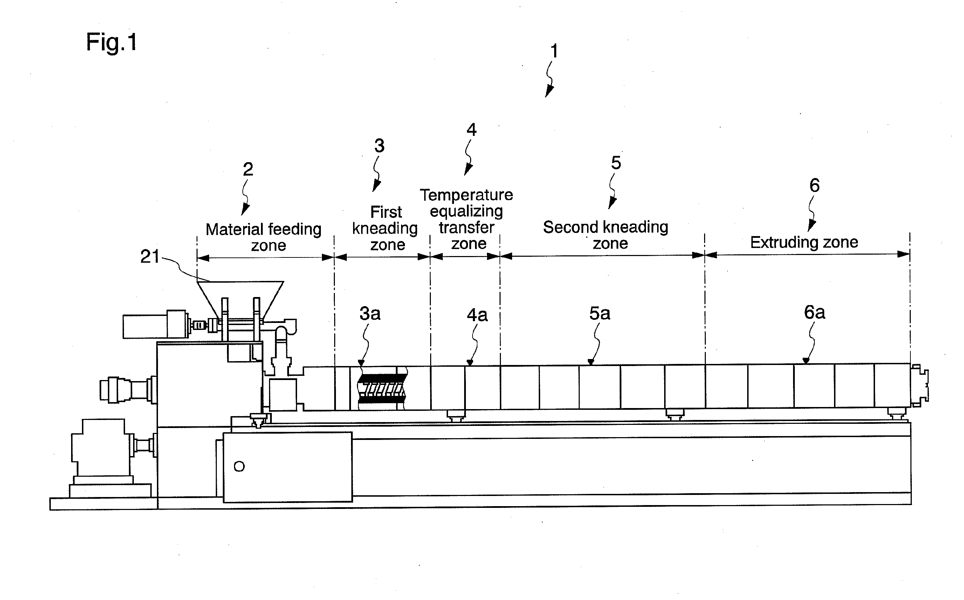

A twin screw extruder 1 that is a multi-screw extruder of the embodiment described below has a structure including barrels and two screws 7 provided to be rotatable in the same direction in the barrels and includes a material feeding zone 2, a first kneading zone 3 that is a preceding kneading zone continuous with the material feeding zone 2, a temperature equalizing transfer zone 4 continuous with the first kneading zone 3, a second kneading zone 5 continuous with the temperature equalizing transfer zone 4, and an extruding zone 6 continuous with the second kneading zone 5, as illustrated in FIG. 1. Each of the screws 7 is formed by combining desired screw elements for the respective zones and mounting them to a shaft 71. The screws 7 in the embodiment are formed by disposing the screw elements so that their flights are displaced 90° from each other and that a side peripheral face between the flight on one of the shafts and the flight on the other are in contact with each other in the same positions in an axial direction of the shafts 71.

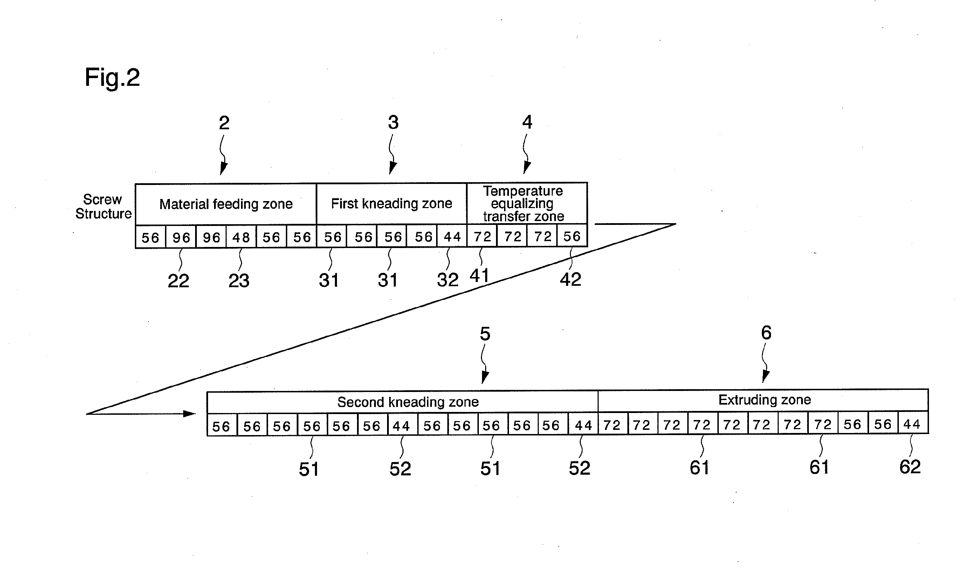

The material feeding zone 2 is an ordinary zone for guiding foam, which is charged from a hopper 21, in an extruding direction without applying a shearing force to the foam. To put it concretely, the material feeding zone 2 includes portions of the screws 7 in which a plurality of screw elements 22 and 23 having lengths of screw segments of about 48 mm to 96 mm are arranged as illustrated in FIG. 2.

The first kneading zone 3 includes a pressure holding portion at its end portion on an extrusion side and is formed to apply the mechanical shearing force to the material to facilitate the plasticating while controlling the temperature and the pressure. To put it concretely, the first kneading zone 3 includes portions of the screws 7 in which a plurality of screw elements 31 having lengths of 56 mm and called kneading disks or rotors are arranged and includes, in a last stage, screw elements 32 of lengths of 44 mm for forming the pressure holding portion as illustrated in FIG. 2. To the two shafts 71 having the same structures of the screw elements 31 and 32, the screw elements 31 and 32 in the same positions of the shafts 71 are mounted in directions at 90° with respect to each other. The first kneading zone 3 is formed so that heating of the barrel can be controlled with a heating means, e.g., a heater, liquid, and the like in order to facilitate shearing.

These screw elements are merely examples and their shapes and lengths can be changed suitably according to the material to be reclaimed.

The temperature equalizing transfer zone 4 includes a pressure holding portion at its end portion on the extrusion side and is formed to transfer, in the extruding direction, the material sent in from the first kneading zone 3. To put it concretely, the temperature equalizing transfer zone 4 includes portions of the screws 7 in which a plurality of screw elements 41 having helical flights of lengths of 72 mm and not applying mechanical shearing forces to the material are arranged and includes, in a last stage, screw elements 42 of lengths of 56 mm for forming the pressure holding portion as illustrated in FIG. 2.

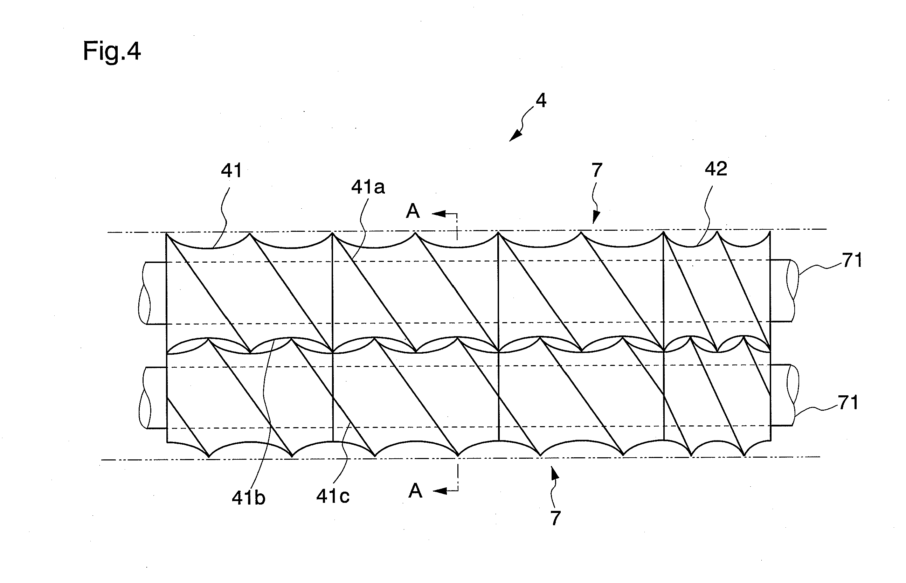

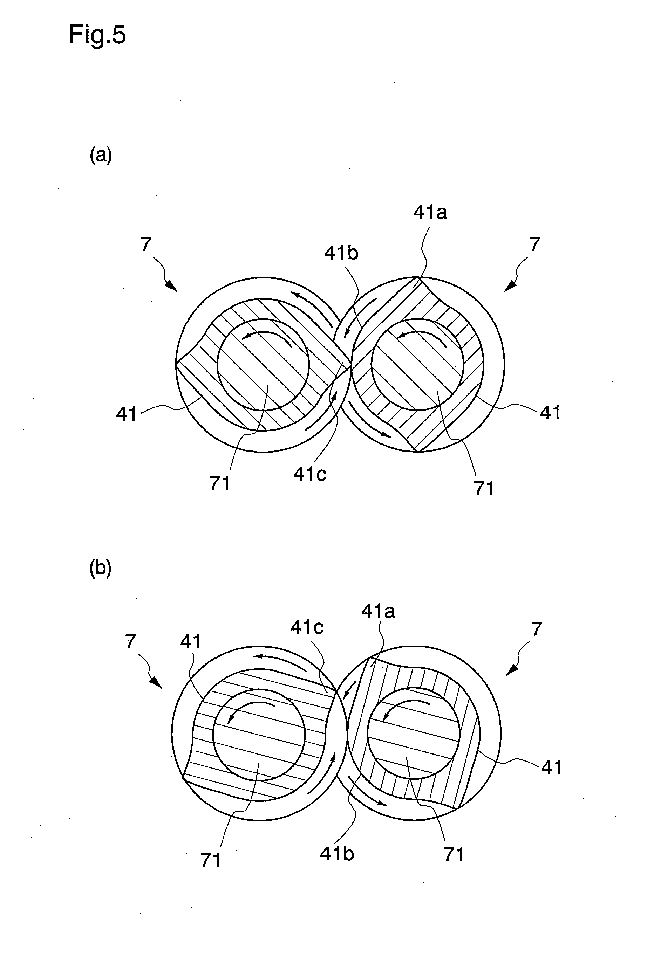

To the two shafts 71, 71 having the same structures of the screw elements 41, the screw elements 41 in the same positions of the shafts 71, 71 are mounted in directions at 90° with respect to each other as illustrated in a sectional view in FIG. 5 (a) along a line A-A in FIG. 4. With a side peripheral face 41b between a flight 41a of one of the shafts, a flight 41c of the other is in contact to thereby form a space. In this space, the two shafts 71, 71 rotate at the same speed in the same direction. As a result, as illustrated in FIG. 5 (b), part of the foam passing by the screw elements 41 of the one shaft and part of the foam passing by the screw elements 41 of the other come in contact with each other from different directions and the foam moves to the second kneading zone 5 while being stirred.

The second kneading zone 5 includes pressure holding portions at its end portion on the extrusion side and its intermediate portion and is formed to apply the mechanical shearing force to the material to facilitate the plasticating while controlling the temperature and the pressure. To put it concretely, the second kneading zone 5 includes portions of the screws 7 in which a plurality of screw elements 51 having lengths of 56 mm and called kneading disks or rotors are arranged and includes, in an intermediate or last stage, screw elements 52 of lengths of 44 mm for forming the pressure holding portion as illustrated in FIG. 2.

The extruding zone 6 is an ordinary zone for biasing the material that has passed through the second kneading zone 5 toward a perforated plate 8. To put it concretely, the extruding zone 6 includes portions of the screws 7 in which screw elements 61 and 62 having helical flights of lengths of 72 mm, 56 mm, and 44 mm are arranged as illustrated in FIG. 2.

In this embodiment, for example, a first temperature sensor 3a is provided in the first kneading zone 3, a second temperature sensor 4a is provided in the temperature equalizing transfer zone 4, a third temperature sensor 5a is provided in the second kneading zone 5, and a fourth temperature sensor 6a is provided in the extruding zone 6, and at least barrel temperature of the first kneading zone 3 is PID controlled by using signals from these sensors.

An example in which foam made of cross-linked polymer material is reclaimed by using the above-described twin screw extruder 1 will be described below.

### Example 1

Foam refuse made of cross-linked polymer material was reclaimed by using the above-described twin screw extruder 1. At this time, in the first kneading zone 3, the temperature equalizing transfer zone 4, the second kneading zone 5, and the extruding zone 6, set temperature of the barrel was set to 150°C and screw speed was set to 400 rpm.

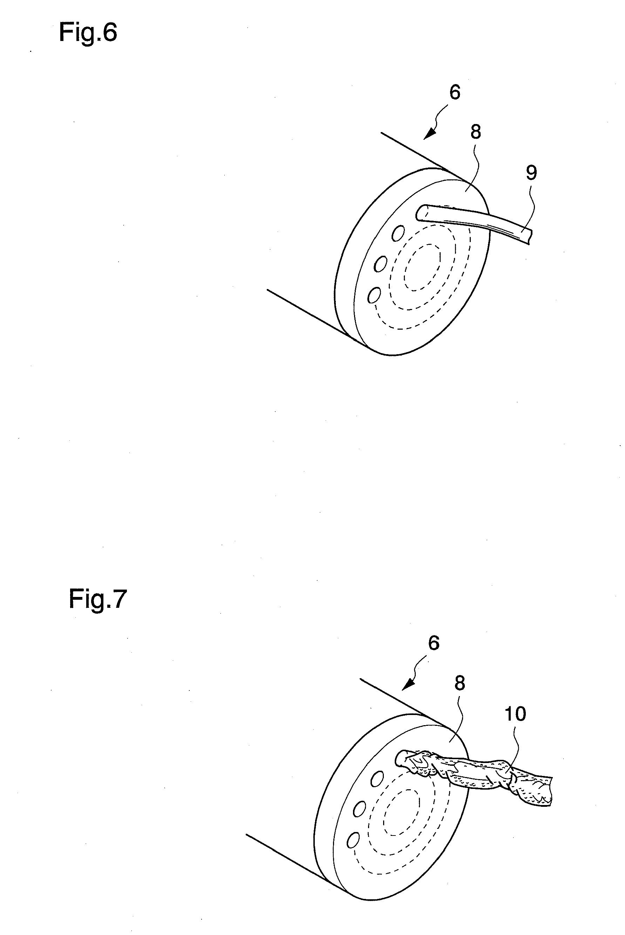

30 grams of reclaimed material 9 obtained under reclaiming conditions of the present example as illustrated in FIG. 6 was mixed with 70 grams of polyethylene resin LF441 (made by Japan Polyethylene Corporation), 3 grams of foaming agent AC#3 (made by EIWA CHEMICAL IND. CO., LTD), 2 grams of foaming aid ZnO, and 0.75 grams of cross-linking agent DCP, filled into a sealed metal mold (23 x 155 x 155 mm in size), heated at 162°C for 35 minutes under pressure, and depressurized to make trial foam. Under the above conditions, preferable reclaimed foam of apparent density of 95 kg/m³ could be obtained.

### Example 2

Set temperature of the barrel in the first kneading zone 3, the temperature equalizing transfer zone 4, the second kneading zone 5, and the extruding zone 6 was set to 130°C and a reclaiming operation was carried out by using the twin screw extruder 1 under other conditions which are all the same as those in the example 1.

By using 30 grams of reclaimed material 9 obtained under reclaiming conditions of the present example as illustrated in FIG. 6, trial foam was made under the same conditions as those in the example 1. Under the above conditions, preferable reclaimed foam of apparent density of 95 kg/m³ could be obtained.

### Comparative Example

By using a twin screw extruder without the temperature equalizing transfer zone 4 of the present invention and with the preceding kneading zone and the subsequent kneading zone directly connected to each other, the set temperature of the barrel was set to 130 °C in the kneading zone and the extruding zone and the screw speed was set to 400 rpm.

By using 30 grams of reclaimed material 10 obtained under reclaiming conditions of the present comparative example as illustrated in FIG. 7, trial foam was made under the same conditions as those in the example 1. Under the above conditions, preferable reclaimed foam could not be obtained.

The invention is not limited to the embodiment described above. Although the barrel is not helped radiate heat or cooled in the temperature equalizing transfer zone described above, a radiating fin and an air blower, or a coolant or a refrigerant pipeline may be provided to an outer wall of the barrel. Alternatively, a coolant passage may be formed in a wall near the inner wall of the barrel.

Other concrete structures of the respective portions are not limited to the embodiment described above but may be changed in various ways without departing from the gist of the invention.

## Claims

1. A multi-screw extruder for reclaiming foam made of cross-linked polymer material into reusable material by causing the foam to pass through a kneading zone, wherein the kneading zone is divided into at least preceding and subsequent two kneading zones and a temperature equalizing transfer zone for equalizing temperature of the foam sheared in the kneading zone is provided between the preceding kneading zone and the subsequent kneading zone.

2. The multi-screw extruder according to claim 1, wherein screw elements having structures not for applying mechanical shearing forces to the foam passing through the temperature equalizing transfer zone are arranged in the temperature equalizing transfer zone.

3. The multi-screw extruder according to claim 2, wherein two shafts rotating in the same direction are respectively mounted with the screw elements.
